# EUROPEAN PATENT APPLICATION

(11) **EP 4 531 447 A1**
(43) Date of publication of application: **02.04.2025**
(21) Application number: 23200773.2
(22) Date of filing: 29.09.2023
(51) Int. Cl.: H04W 16/18, G06N 3/09, H04W 24/02

(54) **APPARATUSES AND METHODS FOR PROCESSING DATA ASSOCIATED WITH A PROPAGATION OF RADIO FREQUENCY SIGNALS**

(71) Applicant: Nokia Solutions and Networks Oy, 02610 Espoo (FI)
(72) Inventor: Cirella, Pasquale, Rome (IT); Sgheiz, Mauro, 23823 Colico (IT); Scaloni, Andrea, Senigallia (IT); Lieti, Valerio, Bologna (IT)
(74) Representative: DREISS Patentanwälte PartG mbB

(57) **Abstract**

An apparatus for processing data associated with a propagation of radio frequency signals, the apparatus comprising at least one processor, and at least one memory storing instructions that, when executed by the at least one processor, cause the apparatus to: provide (200) first information potentially influencing the propagation of radio frequency signals between a transmitter and a receiver, determine (202), based at least on the first information, second information characterizing at least a signal strength associated with at least one radio frequency signal receivable by the receiver using at least a first machine learning technique.

## Description

### Field of the Disclosure

Various example embodiments relate to an apparatus for processing data associated with a propagation of radio frequency signals.

Further embodiments relate to a method for processing data associated with a propagation of radio frequency signals.

### Background

In some conventional approaches, radio frequency, RF, planning is a process used for mobile radio communication systems that involves assigning frequencies, transmitter locations, and parameters to evaluate coverage and capacity. Coverage refers to a distance at which an RF signal is strong enough to sustain a call or data session, while capacity relates to the system data rate. In some conventional approaches, an RF planning process may have several main stages, such as initial radio link budgeting, RF propagation modeling using automatic planning tools, fine-tuning of an RF plan, e.g., by collecting drive data, and adapting the RF plan to accommodate for changes.

### Summary

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Exemplary embodiments relate to an apparatus for processing data associated with a propagation of radio frequency signals, the apparatus comprising at least one processor, and at least one memory storing instructions that, when executed by the at least one processor, cause the apparatus to: provide first information potentially influencing the propagation of radio frequency signals between a transmitter and a receiver, determine, based at least on the first information, second information characterizing at least a signal strength associated with at least one radio frequency signal receivable by the receiver using at least a first machine learning technique. In some embodiments, the principle according to the embodiments may e.g. be used to provide a data-driven approach to determining aspects of radio propagation or coverage, e.g. for a wireless and/or cellular communication system, e.g. enabling to provide a radio propagation model.

In some embodiments, the second information may at least characterize the signal strength, as may e.g. be expressed in the form of a reference signal received power, RSRP, e.g., according to some accepted standard.

In some embodiments, the second information may optionally also characterize at least one aspect of a potential reception of a radio frequency signal by the receiver related to a scheme such as, e.g., TDD (Time Division Duplexing) and/or FDD (Frequency Division Duplexing), and/or CD (Code Division) multiplexing.

In some embodiments, the first information comprises at least one of: a) geolocation information associated with the transmitter, and/or b) geolocation information associated with the receiver, and/or c) a distance between the transmitter and the receiver, and/or d) clutter information (e.g., in the form of a clutter map) characterizing at least one of a distribution and/or characteristics of obstacles for the radio frequency signals, and/or e) scenario classification information characterizing one of an indoor scenario or of an outdoor scenario , and/or f) antenna information associated with the transmitter, wherein the antenna information associated with the transmitter comprises at least one of f1) an azimuth angle of an antenna of the transmitter (e.g., the antenna used for transmitting the RF signals), and/or f2) an elevation angle of the antenna of the transmitter, and/or f3) information characterizing a radiation pattern of the antenna of the transmitter, and/or g) antenna information associated with the receiver, wherein the antenna information associated with the receiver comprises at least one of g1) an azimuth angle of an antenna of the receiver (e.g., an antenna usable for receiving the RF signal(s)), and/or g2) an elevation angle of the antenna of the receiver, and/or g3) information characterizing a radiation pattern of the antenna of the receiver, and/or h) topographic information (e.g., in the form of an altimetry map) characterizing an elevation of at least one area between the transmitter and the receiver.

In some embodiments, the geolocation information may comprise at least one of: a) a latitude, and/or b) a longitude, and/or c) an altitude.

In some embodiments, the distance between the transmitter and the receiver may e.g. be determined based on geolocation information of the transmitter and the receiver.

In some embodiments, the scenario classification information can, e.g., be derived from the clutter information.

In some embodiments, the first machine learning technique comprises a first supervised learning algorithm for regression, for example for non-linear regression.

In some embodiments, a linear regression technique may be used, e.g., at least one of: a) linear Support Vector Regression (SVR), b) linear regressor.

In some embodiments, a decision tree-based technique may be used as the first machine learning technique.

In some embodiments, the first machine learning technique comprises a deep neural network.

In some embodiments, the deep neural network comprises an input layer, an output layer and at least three hidden layers arranged between the input layer and the output layer.

In some embodiments, the deep neural network comprises one or more fully connected layers, e.g., is configured as a deep dense neural network.

In some embodiments, the instructions, when executed by the at least one processor, cause the apparatus to determine the second information, based at least on the first information, using at least one further technique different from the first machine learning technique. In some embodiments, the at least one further technique can be a further machine learning technique. In some embodiments, the at least one further technique can be another technique, e.g., other than a machine learning technique, such as, e.g., an interpolation-based method.

In some embodiments, the at least one further technique comprises at least one of: a) a further supervised learning algorithm for non-linear regression, e.g., an epsilon-Support Vector Regression, epsilon-SVR, technique, and/or b) a received power versus distance bond-based technique, e.g., an RSRP-TA interpolation-based technique.

In some embodiments, the instructions, when executed by the at least one processor, cause the apparatus to perform a training associated with at least the first machine learning technique using reference data, the reference data e.g. characterizing ground truth for the training.

In some embodiments, a gradient descent technique may be used for the training.

In some embodiments, the instructions, when executed by the at least one processor, cause the apparatus to determine the reference data based on measurements.

In some embodiments, the reference data may, e.g., be obtained by measurement(s), e.g., according to some accepted standard, e.g., by Minimization of Drive Test, MDT, measurements, e.g. in accordance with or based on 3GPP TS 37.320.

In some embodiments, the instructions, when executed by the at least one processor, cause the apparatus to determine the reference data based on synthetical information, as may, e.g., be obtained by simulation, e.g., ray-tracing.

In some embodiments, the instructions, when executed by the at least one processor, cause the apparatus to determine the reference data based on both synthetical information and measurements.

In some embodiments, the instructions, when executed by the at least one processor, cause the apparatus to determine the second information, based on the first information, using the first machine learning technique, a further machine learning technique and a reference signal received power versus timing advance, RSRP-TA, interpolation technique.

In some embodiments, results from at least two of these techniques may, e.g., be combined, to obtain the second information.

In some embodiments, results from at least one of these techniques may, e.g., be selected, to obtain the second information, e.g., using the results from a single one of these techniques as the second information. In some embodiments, the selection may be made based on at least one of: a) a scenario type, such as, e.g. indoor or outdoor, b) an individual result of at least one of the three techniques.

Further embodiments relate to an apparatus for processing data associated with a propagation of radio frequency signals, the apparatus comprising means for providing first information potentially influencing the propagation of radio frequency signals between a transmitter and a receiver, determining, based at least on the first information, second information characterizing at least a signal strength associated with at least one radio frequency signal receivable by the receiver using at least a first machine learning technique.

In some embodiments, the means for providing the first information and for determining the second information may, e.g., comprise at least one processor, and at least one memory storing instructions that, when executed by the at least one processor, cause the apparatus to perform the aforementioned aspects.

Some embodiments relate to a device for a communication system, comprising at least one apparatus according to the embodiments.

In some embodiments, the communication system may be a wireless, e.g. cellular, communication system.

In some embodiments, the wireless communication system may adhere to and/or may be based on some accepted (and/or planned) standard, such as, e.g. 3G, 4G, 5G, 6G, or some other wireless communication standard.

In some embodiments, the device according to the embodiments or its functionality, respectively, may be provided for, e.g. integrated into, a network device for the communication system, e.g. a base station, e.g., gNB.

In some embodiments, the device according to the embodiments or its functionality, respectively, may be provided for, e.g. integrated into, a terminal device for the communication system, e.g. a user equipment, UE.

Some embodiments relate to a method for processing data associated with a propagation of radio frequency signals, the method comprising: providing first information potentially influencing the propagation of radio frequency signals between a transmitter and a receiver, determining, based at least on the first information, second information characterizing at least a signal strength associated with at least one radio frequency signal receivable by the receiver using at least a first machine learning technique.

Some embodiments relate to a computer program comprising instructions which, when executed by an apparatus, cause the apparatus to perform at least the following: provide first information potentially influencing the propagation of radio frequency signals between a transmitter and a receiver, determine, based at least on the first information, second information characterizing at least a signal strength associated with at least one radio frequency signal receivable by the receiver using at least a first machine learning technique.

Some embodiments relate to a data carrier signal carrying and/or characterizing the computer program according to the embodiments.

### Brief Description of the Figures

- Fig. 1A: schematically depicts a simplified block diagram according to some embodiments,
- Fig. 1B: schematically depicts a simplified block diagram according to some embodiments,
- Fig. 2: schematically depicts a simplified block diagram according to some embodiments,
- Fig. 3: schematically depicts a simplified flow chart according to some embodiments,
- Fig. 4: schematically depicts a simplified block diagram according to some embodiments,
- Fig. 5: schematically depicts a simplified topology according to some embodiments,
- Fig. 6: schematically depicts a simplified flow chart according to some embodiments,
- Fig. 7: schematically depicts a simplified flow chart according to some embodiments,
- Fig. 8: schematically depicts a simplified flow chart according to some embodiments,
- Fig. 9: schematically depicts a simplified block diagram according to some embodiments.

### Description of some Exemplary Embodiments

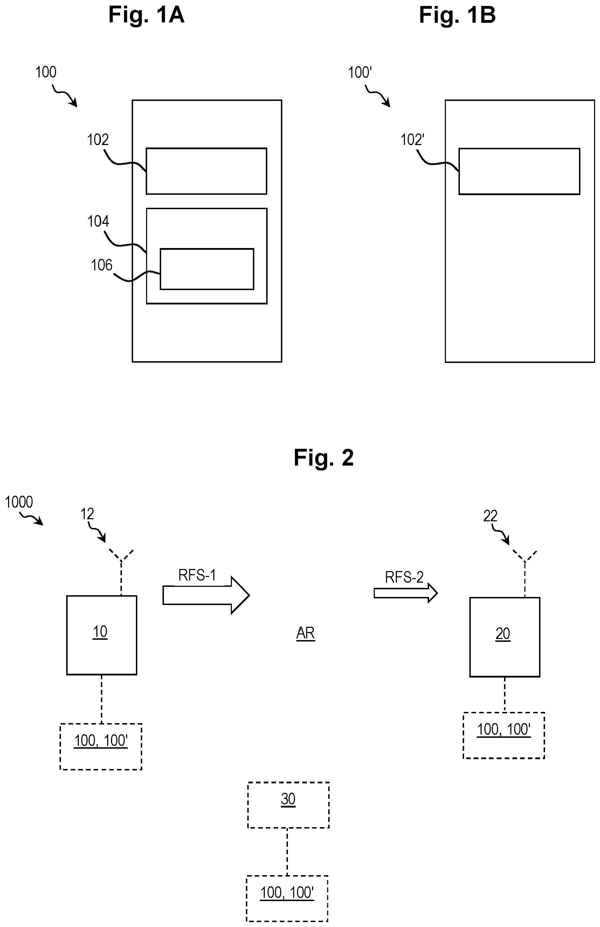

Exemplary embodiments, see, for example, Fig. 1A, 2, 3, relate to an apparatus 100 (Fig. 1A) for processing data associated with a propagation of radio frequency signals RFS-1, RFS-2 (Fig. 2), the apparatus 100 comprising at least one processor 102, and at least one memory 104 storing instructions 106 that, when executed by the at least one processor 102, cause the apparatus 100 to: provide 200 first information I-1 potentially influencing the propagation of radio frequency signals RFS-1, RFS-2 between a transmitter 10 and a receiver 20, determine 202, based at least on the first information 1-1, second information 1-2 characterizing at least a signal strength associated with at least one radio frequency signal RFS-2 receivable by the receiver 20 using at least a first machine learning technique ML-1. In some embodiments, the principle according to the embodiments may e.g. be used to provide a data-driven approach to determining aspects of radio propagation or coverage, e.g. for a wireless and/or cellular communication system 1000, e.g. in a specific area AR associated with at least one of the transmitter 10 and/or the receiver 20.

In some embodiments, the radio frequency signals RFS-1 are radio frequency signals as transmitted by the transmitter 10, and the radio frequency signals RFS-2 are radio frequency signals receivable by the receiver 20, e.g., at the position of the receiver 20.

In some embodiments, the second information 1-2 may at least characterize the signal strength, as may e.g. be expressed in the form of a reference signal received power, RSRP, e.g., according to some accepted standard. In some embodiments, the second information I-2 may characterize the signal strength, e.g., only the signal strength, e.g. as representable by RSRP.

In some embodiments, the second information I-2 may optionally also characterize at least one aspect of a potential reception of a radio frequency signal RFS-2 by the receiver 20 related to a scheme such as, e.g., TDD (Time Division Duplexing) and/or FDD (Frequency Division Duplexing), and/or CD (Code Division) multiplexing.

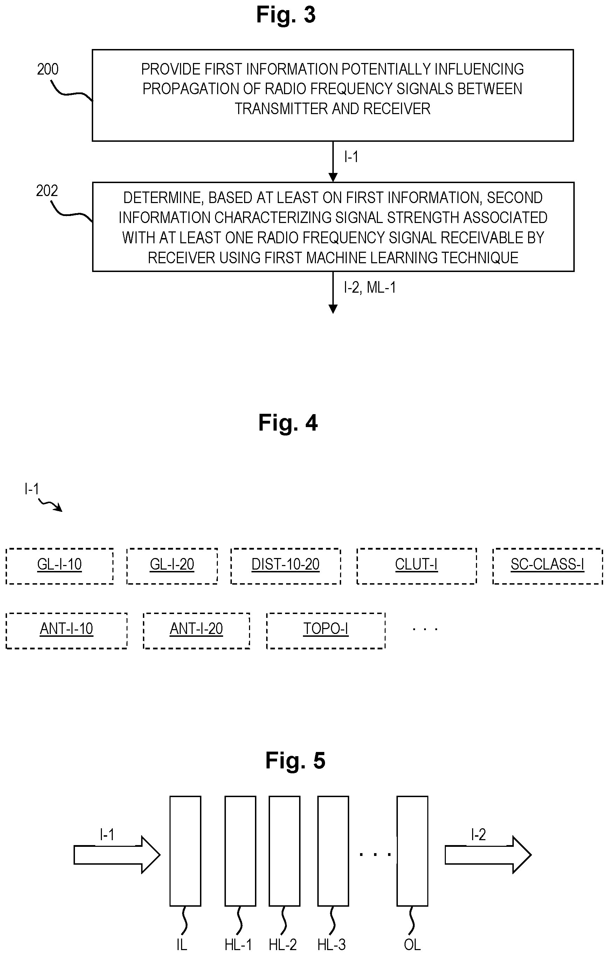

In some embodiments, Fig. 4, the first information I-1 comprises at least one of: a) geolocation information GL-I-10 associated with the transmitter 10 (Fig. 2), and/or b) geolocation information GL-I-20 (Fig. 4) associated with the receiver 20, and/or c) a distance DIST-10-20 between the transmitter 10 and the receiver 20, and/or d) clutter information CLUT-I (e.g., in the form of a clutter map) characterizing at least one of a distribution and/or characteristics of obstacles for the radio frequency signals RFS-1, RFS-2, and/or e) scenario classification information SC-CLASS-I characterizing one of an indoor scenario or of an outdoor scenario (e.g., indicating whether at least one of the transmitter 10 and/or receiver 20 is positioned indoors or outdoors), and/or f) antenna information ANT-I-10 associated with the transmitter 10, wherein the antenna information ANT-I-10 associated with the transmitter 10 comprises at least one of f1) an azimuth angle of an antenna 12 (Fig. 2) of the transmitter 10 (e.g., the antenna 12 used for transmitting the RF signals RFS-1, RFS-2), and/or f2) an elevation angle of the antenna 12 of the transmitter 10, and/or f3) information characterizing a radiation pattern of the antenna 12 of the transmitter 10, and/or g) antenna information ANT-I-20 associated with the receiver 20, wherein the antenna information ANT-I-20 associated with the receiver 20 comprises at least one of g1) an azimuth angle of an antenna 22 of the receiver 20 (e.g., an antenna usable for receiving the RF signal(s) RFS-1, RFS-2), and/or g2) an elevation angle of the antenna 22 of the receiver 20, and/or g3) information characterizing a radiation pattern of the antenna 22 of the receiver 20, and/or h) topographic information TOPO-I (e.g., in the form of an altimetry map) characterizing an elevation of at least one area AR (Fig. 2) between the transmitter 10 and the receiver 20.

In some embodiments, Fig. 4, the geolocation information GL-I-10, GL-I-20 may comprise at least one of: a) a latitude, and/or b) a longitude, and/or c) an altitude.

In some embodiments, the distance DIST-10-20 between the transmitter 10 and the receiver 20 may e.g. be determined based on geolocation information GL-I-10, GL-I-20 of the transmitter 10 and the receiver 20.

In some embodiments, the scenario classification SC-CLASS-I information can, e.g., be derived from the clutter information CLUT-I.

In some embodiments, the first machine learning technique ML-1 comprises a first supervised learning algorithm for regression, for example for non-linear regression.

In some embodiments, Fig. 5, the first machine learning technique ML-1 comprises a deep neural network, an exemplary simplified topology is schematically depicted by Fig. 5.

In some embodiments, Fig. 5, the deep neural network comprises an input layer IL, an output layer OL and at least three hidden layers HL-1, HL-2, HL-3, ... arranged between the input layer IL and the output layer OL.

In some embodiments, the deep neural network comprises one or more fully connected layers HL-1, ..., e.g., is configured as a deep dense neural network.

In some embodiments, a number of neurons of one hidden layer is equal to or greater than 100. In some embodiments, a number of neurons of at least one further hidden layer is smaller than 100.

In some embodiments, a normalization layer may be provided, e.g., as the input layer IL.

In some embodiments, Fig. 5, the deep neural network is configured to receive the first information I-1 as input data and to provide at its output the second information I-2 as output data. In some embodiments, the output data may e.g. comprise or represent an RSRP value associated with the provided input data.

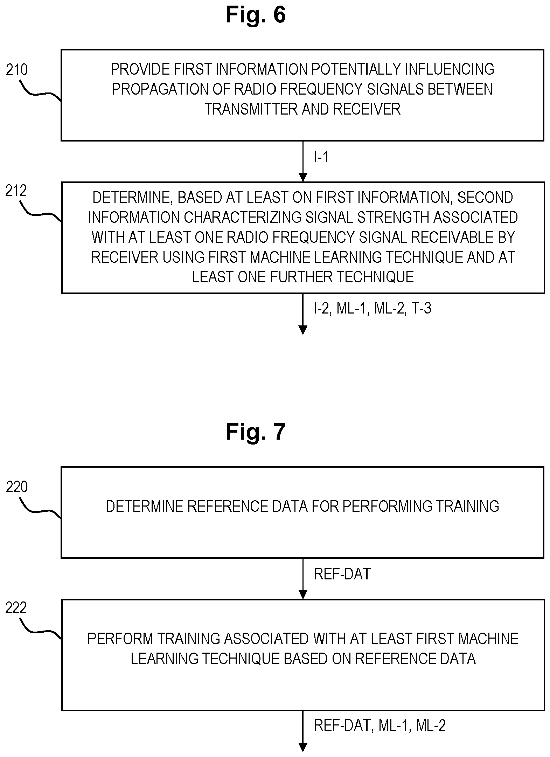

In some embodiments, Fig. 6, the instructions 106 (Fig. 1A), when executed by the at least one processor 102, cause the apparatus 100 to determine 212 the second information I-2, based at least on the first information I-1, using at least one further technique ML-2, T-3 different from the first machine learning technique ML-1.

In some embodiments, the at least one further technique ML-2, T-3 can be a further machine learning technique. In some embodiments, the at least one further technique can be another technique, e.g., other than a machine learning technique, such as, e.g., an interpolation-based method.

In some embodiments, the at least one further technique comprises at least one of: a) a further supervised learning algorithm for non-linear regression, e.g., an epsilon-Support Vector Regression, epsilon-SVR, technique ML-2, and/or b) a received power versus distance bond-based technique, e.g., an RSRP-TA interpolation-based technique T-3.

Block 210 of Fig. 6 symbolizes providing the first information I-1, e.g., similar to block 200 of Fig. 3.

In some embodiments, Fig. 7, the instructions 106, when executed by the at least one processor 102, cause the apparatus 100 to perform 222 a training associated with at least the first machine learning technique ML-1, e.g. training of the DDNN, e.g. using reference data REF-DAT, the reference data REF-DAT e.g. characterizing ground truth for the training.

In some embodiments, Fig. 7, the instructions 106, when executed by the at least one processor 102, cause the apparatus 100 to determine 220 the reference data, e.g., based on measurements.

In some embodiments, the reference data may, e.g., be obtained by measurement(s), e.g., according to some accepted standard, e.g., by Minimization of Drive Test, MDT, measurements.

In some embodiments, the instructions 106, when executed by the at least one processor 102, cause the apparatus 100 to determine the reference data REF-DAT based on synthetical information, as may, e.g., be obtained by simulation, e.g., ray-tracing.

In some embodiments, the instructions 106, when executed by the at least one processor 102, cause the apparatus 100 to determine the reference data REF-DAT based on both synthetical information and measurements.

In some embodiments, Fig. 7, performing 222 the training may comprise training at least one of the first machine learning technique and/or the at least one further machine learning technique. In some embodiments, the same reference data REF-DAT may be used for the training 222 of the first machine learning technique and of the at least one further machine learning technique ML-2.

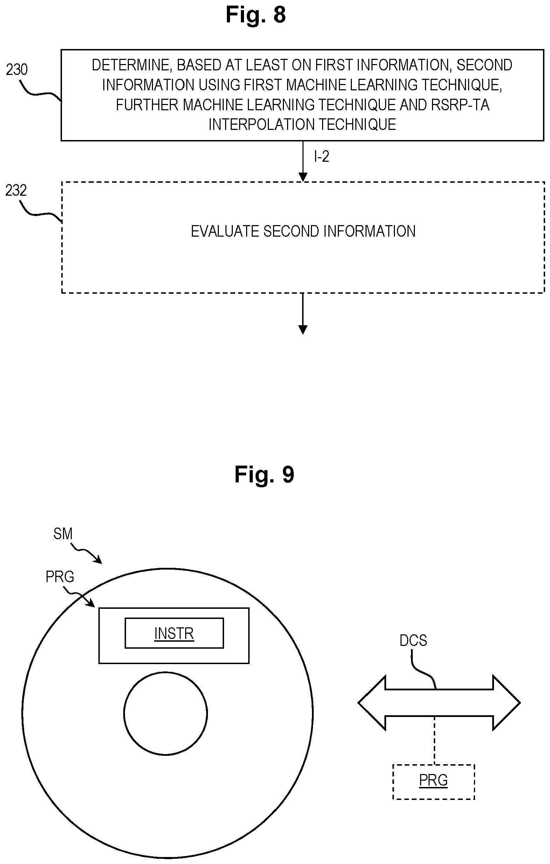

In some embodiments, Fig. 8, the instructions 106, when executed by the at least one processor 102, cause the apparatus 100 to determine 230 the second information I-2, based on the first information I-1, using the first machine learning technique ML-1 (e.g., in the form of the DNN or DDNN), a further machine learning technique ML-2 (e.g., in the form of an epsilon-SVR) and a reference signal received power, RSRP, versus timing advance, TA, RSRP-TA, interpolation technique T-3.

The optional block 232 of Fig. 8 symbolizes an optional evaluation of the results or outputs from the first machine learning technique ML-1, the further machine learning technique ML-2, and the RSRP-TA interpolation technique T-3.

In some embodiments, Fig. 8, results from at least two of these techniques ML-1, ML-2, T-3 may, e.g., be combined, to obtain the second information, e.g. in the course of the evaluation 232.

In some embodiments, results from at least one of these techniques ML-1, ML-2, T-3 may, e.g., be selected, to obtain the second information I-2, e.g., using the results from a single one of these techniques ML-1, ML-2, T-3 as the second information I-2. In some embodiments, the selection may be made based on at least one of: a) a scenario type, such as, e.g. indoor or outdoor, b) an individual result of at least one of the three techniques ML-1, ML-2, T-3.

Further embodiments, Fig. 1B, relate to an apparatus 100' for processing data associated with a propagation of radio frequency signals, the apparatus 100' comprising means 102' for providing 200 first information I-1 potentially influencing the propagation of radio frequency signals RFS-1, RFS-2 between a transmitter 10 and a receiver 20, determining 202, based at least on the first information I-1, second information I-2 characterizing at least a signal strength associated with at least one radio frequency signal RFS-2 receivable by the receiver 20 using at least a first machine learning technique ML-1.

In some embodiments, Fig. 1B, the means 102' for providing 200 the first information I-1 and for determining 202 the second information I-2 may, e.g., comprise at least one processor 102 (Fig. 1A), and at least one memory 104 storing instructions 106 that, when executed by the at least one processor 102, cause the apparatus 100' to perform the aforementioned aspects.

In some embodiments, circuitry (not shown) for providing 200 the first information I-1 and for determining 202 the second information I-2 may be provided.

Some embodiments, Fig. 2, relate to a device 10, 20, 30 for a communication system 1000, comprising at least one apparatus 100, 100' according to the embodiments. In some embodiments, the device 10, 20, 30 may comprise or represent at least one of the transmitter 10 and/or the receiver 20.

In some embodiments, the communication system 1000 may be a wireless, e.g. cellular, communication system.

In some embodiments, the communication system 1000 may adhere to and/or may be based on some accepted (and/or planned) standard, such as, e.g. 3G, 4G, 5G, 6G, or some other wireless communication standard.

In some embodiments, Fig. 2, the device according to the embodiments or its functionality, respectively, may be provided for, e.g. integrated into, a network device for the communication system 1000, e.g. a base station, e.g., gNB. As an example, in some embodiments, such network device may e.g. comprise the exemplary transmitter 10 of Fig. 2.

In some embodiments, the device according to the embodiments or its functionality, respectively, may be provided for, e.g. integrated into, a terminal device for the communication system, e.g. a user equipment, UE. As an example, in some embodiments, such UE may e.g. comprise the exemplary receiver 20 of Fig. 2.

Some embodiments, Fig. 3, relate to a method for processing data associated with a propagation of radio frequency signals, the method comprising: providing 200 first information I-1 potentially influencing the propagation of radio frequency signals between a transmitter 10 and a receiver 20, determining 202, based at least on the first information I-1, second information I-2 characterizing at least a signal strength associated with at least one radio frequency signal RFS-2 receivable by the receiver 20 using at least a first machine learning technique ML-1.

Some embodiments, Fig. 9, relate to a computer program PRG comprising instructions INSTR (also see, for example, element 106 of Fig. 1A) which, when executed by an apparatus 100, 100', cause the apparatus 100, 100' to perform at least the following: provide 200 first information I-1 potentially influencing the propagation of radio frequency signals between a transmitter and a receiver, determine 202, based at least on the first information, second information I-2 characterizing at least a signal strength associated with at least one radio frequency signal receivable by the receiver using at least a first machine learning technique ML-1.

Some embodiments, Fig. 9, relate to a data carrier signal DCS carrying and/or characterizing the computer program PRG according to the embodiments.

In some embodiments, the computer program PRG, e.g. in the form of the instructions INSTR, may be stored on a computer-readable storage medium SM.

In the following, further exemplary aspects and exemplary embodiments are disclosed, which, in some embodiments, may be combined with each other and/or with at least one of the aforementioned aspects.

In some embodiments, the principle according to the embodiments may, e.g., be used to provide, e.g., implement, a methodology able to estimate an RSRP of a, for example predetermined, area AR (Fig. 2), given input information, e.g., in the form of the first information I-1.

In some embodiments, the first information I-1 may be related to, e.g., characterize, at least one of: a) geo-localization information, and/or b) primary cell characteristics (e.g., in case of a cellular communication system 1000), and/or c) antenna diagrams (e.g., of the transmitter 10 and/or the receiver 20), and/or d) environmental description, such as, e.g., clutter information and/or topographic information and the like.

In some embodiments, the different types or values of input information as characterized by the first information I-1 may be aggregated, e.g., merged, e.g. to an input data format suitable for the first machine learning technique ML-1, e.g., DNN or DDNN. As an example, in some embodiments, the first information I-1 may be organized in vector form, e.g., representing an input vector for the DNN. In some embodiments, the DNN may provide an estimate of a received power, e.g., in the form of an RSRP value, in a certain location associated with the receiver 20.

In some embodiments, e.g., in case of a cellular communication system, the first machine learning technique ML-1, e.g., DNN or DDNN, may be configured and/or trained to determine, based on the first information I-1, second information I-2, e.g. in the form of RSRP values, within a specific cell associated with the transmitter 10.

In some embodiments, for different cells of the communication system 1000, a respectively differently trained DNN or DDNN (or other first machine learning technique ML-1) may be provided per cell to determine second information I-2 associated with the respective cell.

In some embodiments, e.g., in addition to the first machine learning technique ML-1, e.g., DNN, e.g., DDNN, one or more, e.g., two, other, for example linear or non-linear, regression techniques, e.g., algorithms, ML-2, T-3 may, at least temporarily, be used, e.g., to support and/or to validate and/or to refine a prediction as characterized by the second information I-2 output by the first machine learning technique ML-1, e.g., an epsilon-Support Vector Regression (SVR) and an RSRP-TA interpolation.

As an example, in some embodiments, an SVR-based technique may, in some cases, better fit an outdoor scenario, as e.g. characterized by a respective point cloud, while another algorithm, e.g. RSRP-TA interpolation, may be more precise for, e.g., an indoor scenario.

In some embodiments, these two additional regression and/or interpolation techniques ML-2, T-3 may e.g. be used as a benchmark, whereas the DNN or DDNN ML-1 may, e.g., focus more on details. In some embodiments, by combing the outputs of the different approaches ML-1, ML-2, T-3, an increased precision of the second information I-2 may be obtained, e.g., in cases with sparse reference data, that, for example, does not allow for a proper training phase.

In some embodiments, the reference data REF-DAT for training the DNN or DDNN ML-1 may e.g. be obtained using at least one of the further techniques ML-2, T-3.

In some embodiments, the principle according to the embodiments enables to implement a method which allows to predict a received power, e.g. RSRP, e.g., in different scenarios, e.g., customizing a distance range and/or antenna's characteristics, e.g., even in areas not covered by reference data such as e.g. MDT data.

In some embodiments, the principle according to the embodiments enables to produce a, for example completely, data-based output, e.g., in form of the second information I-2, which enables to consider also particular subsets with peculiar electromagnetic behavior which are, for example, not or not reliably, theoretically predictable.

In some embodiments, the time required for inference by the first machine learning technique ML-1, e.g. DNN, e.g., DDNN, is comparatively small, e.g., in some embodiments significantly smaller as compared with other, e.g., conventional approaches and, concurrently, an overall complexity may decrease, as compared to some conventional approaches.

In some embodiments, the principle according to the embodiments enables to estimate a, for example punctual, RSRP, e.g., an RSRP as may be experienced by a receiver 20 at a specific location.

In some embodiments, a radio coverage map may be determined using the principle according to the embodiments, e.g., by determining the second information I-2, e.g., RSRP, for a plurality of positions of a, for example predetermined, area AR, such as, e.g. an area associated with a transmitter 10 or a base station, e.g., gNB, associated with the transmitter 10.

In some embodiments, as already mentioned above, potential data sources to be used by the principle according to the embodiments, e.g., for training and/or inference, may e.g. comprise MDT (Minimization of Drive Tests) data, e.g. comprising, for example periodic, reports of a location (e.g., a GPS location of a UE comprising the receiver 20), and/or layer 2 (L2) and/or layer 3 (L3) measurements, e.g., according to some accepted standard, such as, e.g., RSRP values.

In some embodiments, potential strengths of these data are at least one of: o accuracy, especially in outdoor case, in localization, o simplicity in extracting reports, o convenience with respect to drive tests, o short lead time since data are collected and processed by a centralized unit (Data Collector) and shortly available, o statistical relevance of georeferenced data, o flexibility with off-the-shelf modules, o no impact on user plane data throughput.

In some embodiments, altimetry maps may be used, e.g. characterizing a geographical representation of the terrain altimetry, e.g., of an interesting area AR (Fig. 2). In some embodiments, a map resolution of the altimetry maps is customizable and, in some embodiments, may e.g. be set to resolution wherein one pixel of the altimetry map corresponds to 5 meters, which provides a comparatively high spatial resolution.

In some embodiments, a clutter map, e.g. enabling to differentiate an environment in several classes such as e.g., outdoor and indoor scenario, may be provided and/or may be used, e.g., for determining at least a part of the first information I-1. In some embodiments, a spatial resolution of, e.g., 5 meters per pixel, can be used for the clutter map.

In some embodiments, antenna information may form part of the first information I-1, such as, e.g., basic information on a localization (e.g., latitude and/or longitude and/or altitude), and/or height (e.g., above ground), and/or information on electrical and/or mechanical tilts, and/or transmitted power and/or cell identifier.

In some embodiments, antenna radiation diagrams, e.g., beam characteristics, e.g. characterizing an antenna gain in a vertical and/or horizontal direction, may be used to determine at least a part of the first information I-1.

In the following, aspects of pre-processing and training set creation according to some embodiments are disclosed.

In some embodiments, input data to the at least one machine learning technique ML-1, e.g., representing the first information I-1 (or at least a part thereof), may be processed, e.g., to keep coherence about, e.g., an informative content. As an example, in some embodiments, all height contributes relate to a same starting point, e.g. reference level, e.g., the so called 'sea level'.

In some embodiments, at least some parts of the first information I-1 may be processed, e.g., to determine, e.g. extract, new, for example meaningful, factors. As an example, e.g., from a latitude, longitude, and height of the receiver 20 (e.g., associated with a UE) and the transmitter 10 (e.g., associated with a BTS or gNB), the geometric distance DIST-10-20 may be determined.

In some embodiments, an elevation angle between the transmitter 10 and the receiver 20 may be determined, e.g. based on at least some of the first information I-1.

In some embodiments, an azimuth angle, e.g. referring to the polar North may be calculated, wherein, in some embodiments, a direct link between antenna radiation diagrams, angles and antenna loss/gain is provided.

In some embodiments, clutter information as e.g. derivable from a clutter map enables to provide a, for example binary, sample classification, e.g. in indoor or outdoor scenario, which, in some embodiments, may e.g. be used to distinguish a training phase and an inference phase in two separate algorithms (e.g., one algorithm for indoor scenarios, and one algorithm for outdoor scenarios).

In some embodiments, as mentioned above, MDT data may be used, wherein, for a cellular communication system 1000, an RSRP of a primary cell is considered, as well as, optionally, RSRP from non-serving cells.

In some embodiments, at least some of the information coming from data sources for forming the first information I-1, may be aggregated and, for example, grouped by pixel of custom dimension (e.g., 5 meters by 5 meters, as an example).

In some embodiments, one or more of the following information may be provided as input data, e.g., for the DDNN: • pixel centroid latitude and longitude, • mean RSRP, • mean altitude, • predominant clutter identifier (e.g., "id") or name, • distance among pixel centroid and serving BTS, • angle among pixel centroid and serving BTS.

In some embodiments, the aforementioned information that may be provided as input data may, e.g., be organized, e.g., grouped, e.g., in a matrix, where each element of the matrix e.g. represents an aggregated value of the respective information for a single pixel. In some embodiments, a dimension of a pixel may be variable, e.g., according to a requested resolution (e.g., 5 meters by 5 meters) .

In some embodiments, a filtering process may be performed, e.g. to ensure that only data with a precision score greater than a given threshold is considered, e.g., stored, wherein, for example, high probability outliers may be discarded.

In the following, exemplary aspects of an inference phase according to some embodiments are disclosed.

In some embodiments, one or more of the three techniques ML-1, ML-2, T-3 may be used to determine the second information, e.g., RSRP estimate. As an example, in some embodiments, the first machine learning technique ML-1, e.g., DNN, e.g. DDNN, may be used to determine a first RSRP estimate, while the second machine learning technique ML-2, e.g., epsilon-SVR, may be used to determine a second RSRP estimate, while the third technique, e.g., RSRP-TA interpolation, may be used to determine a third RSRP estimate.

In some embodiments, e.g., besides the DNN or DDNN ML-1, the further techniques ML-2, T-3 may e.g. be used as benchmarks, since, in some embodiments, they tend to reproduce a best fit non-linear shape from a received power distribution. In some embodiments, this enables to validate the inference, e.g., by the DNN or DDNN, and to have reliable predictions even in areas not heavily populated by reference data (e.g., MDT data) for training of the DNN.

In some embodiments, an epsilon-Support Vector Regression (SVR) technique may e.g. be used for outdoor samples, and an interpolation of RSRP, e.g., starting from timing advance (TA) information may be used for an indoor scenario.

In some embodiments, e.g., after a training is finished, the three techniques ML-1, ML-2, T-3 may be used to determine the second information I-2, e.g. inferring RSRP values in a predetermined area AR, e.g. around a transmitter 10, which may e.g. be associated with a BTS or gNB.

In some embodiments, a determination of the second information I-2 may be performed in a predetermined angular range of, e.g., 360 degrees around the transmitter 10, e.g. BTS, e.g., for each site under analysis.

In some embodiments, a plurality of radio cells, for example 88 cells, may be analyzed by using the principle according to the embodiments. In some approaches, a ground truth (e.g., reference data) may, e.g., be available only for a training set. As an example, MDT data, which can be used as ground truth, may be scarce, and some embodiments may be related to determining, e.g., estimating, RSRP values especially in areas where MDT data or other reference data are not available. Thus, in some embodiments, a benchmark, e.g., to determine, e.g., compute, an MSE (mean square error), e.g., between an actual value of, e.g., the RSRP and the value determined by the DNN ML-1, may not be available. Therefore, to stem such instance, in some embodiments, the original training set may be, e.g. proportionally, split, e.g. engendering the validation set. In other words, in some embodiments, an original training set may partly be used as training set, and another part of the original training set may be used for validation of the trained DNN. In some embodiments, this new portion of samples obtained by the splitting may e.g. be used to tune one or more hyperparameters of the DNN, e.g., DDNN, but, in some embodiments, also, e.g., with higher relevance, to estimate an inference error.

In some embodiments, a mean squared error, e.g., per cell, MSE_cell_i may be determined, e.g., computed, e.g. in accordance with:
MSE_cell_i = mean (RSRP_Validation_Set_i - RSRP_MDT_Data) for i cell,
and a global MSE may be determined based on: MSE_global = mean [sum (MSE_cell_i)].

In some embodiments, the principle according to the embodiments may be integrated and/or offered in the form of a web-service, e.g. being hosted by one or more cloud and/or edge servers.

## Claims

1. An apparatus (100) for processing data associated with a propagation of radio frequency signals, the apparatus (100) comprising at least one processor (102), and at least one memory (104) storing instructions (106) that, when executed by the at least one processor (102), cause the apparatus (100) to:
provide (200) first information (I-1) potentially influencing the propagation of radio frequency signals (RFS-1, RFS-2) between a transmitter (10) and a receiver (20), determine (202), based at least on the first information (I-1), second information (I-2) characterizing at least a signal strength associated with at least one radio frequency signal (RFS-2) receivable by the receiver (20) using at least a first machine learning technique (ML-1).

2. The apparatus (100) according to claim 1, wherein the first information (I-1) comprises at least one of: a) geolocation information (GL-I-10) associated with the transmitter (10), and/or b) geolocation information (GL-I-20) associated with the receiver (20), and/or c) a distance (DIST-10-20) between the transmitter (10) and the receiver (20), and/or d) clutter information (CLUT-I) characterizing at least one of a distribution and/or characteristics of obstacles for the radio frequency signals, and/or e) scenario classification information (SC-CLASS-I) characterizing one of an indoor scenario or of an outdoor scenario, and/or f) antenna information (ANT-I-10) associated with the transmitter (10), wherein the antenna information (ANT-I-10) associated with the transmitter (10) comprises at least one of f1) an azimuth angle of an antenna (12) of the transmitter (10), and/or f2) an elevation angle of the antenna (12) of the transmitter (10), and/or f3) information characterizing a radiation pattern of the antenna (12) of the transmitter (10), and/or g) antenna information (ANT-I-20) associated with the receiver (20), wherein the antenna information (ANT-I-20) associated with the receiver (20) comprises at least one of g1) an azimuth angle of an antenna (22) of the receiver (20), and/or g2) an elevation angle of the antenna (22) of the receiver (20), and/or g3) information characterizing a radiation pattern of the antenna (22) of the receiver (20), and/or h) topographic information (TOPO-I) characterizing an elevation of at least one area (AR) between the transmitter (10) and the receiver (20).

3. The apparatus (100) according to any of the preceding claims, wherein the first machine learning technique (ML-1) comprises a first supervised learning algorithm for regression, for example non-linear regression.

4. The apparatus (100) of any of the preceding claims, wherein the first machine learning technique (ML-1) comprises a deep neural network.

5. The apparatus (100) according to claim 4, wherein the deep neural network comprises an input layer (IL), an output layer (OL) and at least three hidden layers (HL-1, HL-2, HL-3) arranged between the input layer (IL) and the output layer (OL).

6. The apparatus (100) according to any of the preceding claims, wherein the instructions (106), when executed by the at least one processor (102), cause the apparatus (100) to determine (212) the second information (I-2), based at least on the first information (I-1), using at least one further technique (ML-2, T-3) different from the first machine learning technique (ML-1).

7. The apparatus (100) of claim 6, wherein the at least one further technique (ML-2, T-3) comprises at least one of: a) a further supervised learning algorithm for non-linear regression, and/or b) a received power versus distance bond-based technique.

8. The apparatus (100) according to any of the preceding claims, wherein the instructions (106), when executed by the at least one processor (102), cause the apparatus (100) to perform (222) a training associated with at least the first machine learning technique (ML-1) using reference data (REF-DAT).

9. The apparatus (100) according to claim 8, wherein the instructions (106), when executed by the at least one processor (102), cause the apparatus (100) to determine (220) the reference data (REF-DAT) based on measurements.

10. The apparatus (100) according to any of the claims 6 to 9, wherein the instructions (106), when executed by the at least one processor (102), cause the apparatus (100) to determine (230) the second information (I-2), based on the first information (I-1), using the first machine learning technique (ML-1), a further machine learning technique (ML-2) and a reference signal received power versus timing advance, RSRP-TA, interpolation technique.

11. An apparatus (100') for processing data associated with a propagation of radio frequency signals, the apparatus (100') comprising means (102') for providing (200) first information (I-1) potentially influencing the propagation of radio frequency signals (RFS-1, RFS-2) between a transmitter (10) and a receiver (20), determining (202), based at least on the first information (I-1), second information (I-2) characterizing at least a signal strength associated with at least one radio frequency signal (RFS-2) receivable by the receiver (20) using at least a first machine learning technique (ML-1).

12. A device (10, 20, 30) for a communication system (1000), comprising at least one apparatus (100; 100') according to any of the preceding claims.

13. A method for processing data associated with a propagation of radio frequency signals, the method comprising: providing (200) first information (I-1) potentially influencing the propagation of radio frequency signals (RFS-1, RFS-2) between a transmitter (10) and a receiver (20), determining (202), based at least on the first information (I-1), second information (I-2) characterizing at least a signal strength associated with at least one radio frequency signal (RFS-2) receivable by the receiver (20) using at least a first machine learning technique (ML-1).

14. A computer program (PRG) comprising instructions (INSTR) which, when executed by an apparatus (100; 100'), cause the apparatus (100; 100') to perform at least the following: provide (200) first information (I-1) potentially influencing the propagation of radio frequency signals (RFS-1, RFS-2) between a transmitter (10) and a receiver (20), determine (202), based at least on the first information (I-1), second information (I-2) characterizing at least a signal strength associated with at least one radio frequency signal (RFS-2) receivable by the receiver (20) using at least a first machine learning technique (ML-1).

15. A data carrier signal (DCS) carrying and/or characterizing the computer program (PRG) of claim 14.
